# EUROPEAN PATENT APPLICATION

(11) **EP 1 640 855 A2**
(43) Date of publication of application: **29.03.2006**
(21) Application number: 05108788.0
(22) Date of filing: 23.09.2005
(51) Int. Cl.: G06F 3/14

(54) **Graphical user interface adaptable to be displayed on multiple display devices**

(30) Priority: 24.09.2004 US 949626
(71) Applicant: Magix AG, 10117 Berlin (DE)
(72) Inventor: Herberger, Tilman, 01219 Dresden (DE); Tost, Titus, 01219 Dresden (DE)

(57) **Abstract**

There is provided herein a system and method for automatic adaptation of the graphical user interface of computer program (501) to accommodate a wide variety of display devices, e.g. TV, VGA or SVGA, thereby ensuring that the user of the software is supplied with a graphical user interface (504,514) that is designed to be viewable and operable on a wide variety of connected display devices. The invention is further designed to assist the user that wishes to work with two different display devices (506,508), either simultaneously or one after the other. The selection of the appropriate graphical user interface is carried out after an automatic detection step (503) that determines the technical specifications of the connected display devices and matches those specifications (502,505) with GUIs that have been previously developed for use on particular sorts of displays.

## Description

### FIELD OF THE INVENTION

The present invention relates generally to the field of editing, creating, viewing, and using digital media. More particularly, but not by way of limitation, the present invention relates to - programs for creating and editing digital multimedia works whose graphical user interfaces are adaptable to be displayed on multiple display devices resulting from different resolutions or usage scenarios.

### BACKGROUND OF THE INVENTION

In the past few years the personal computer has evolved from a simple word processing / spreadsheet tool into a multimedia hub with the functionality to accommodate a wide variety of digital media types including digital photographs, digital video, digital audio, etc. Of course, this evolution has been accompanied by increasing integration between the hardware that allows users to create digital media files (e.g., digital cameras, video camera devices, scanners, etc.), with the peripheral hardware manufacturers making good use of the increasingly standardized interface options (e.g., USB, USB 2.0, FireWire, etc.) offered by the computer manufacturers. Further, it has become expected that modern computers will be able to read and play digital media files from sources such as DVDs, Audio CDs, E-books, etc. Additionally, TV and radio tuners (whether provided as original computer equipment or added subsequently) have made it possible for a user to watch and record video and audio data while sitting at the computer thereby contributing further to the multimedia hub trend.

Of course, this proliferation in interconnectability has encouraged users to import digital media - and to want to edit such media after it has been imported. Software developers have responded to this need and have created programs for playback and editing of digital audio, photo, and video material.

However, the graphic user interface ("GUI") of such multimedia editing and replay programs has not improved as rapidly as has the associated hardware technology. That is, in most instances, the GUI of multimedia editing programs has not been changed in any material way in terms of layout or appearance in recent memory. Instead, an old GUI is typically patched to include new menu items when it is desired to add new functionality to an existing program. Further, and in spite of the fact that high resolution monitors are now more the rule than the exception, the GUI of most programs is based on the assumption that the user has VGA or similar resolution, resolution that is sufficient to allow a user to activate its functions when viewed on a big TV screen at a distance of ten feet or more. As a consequence, most media center software solutions feature a graphical user interface that utilizes big buttons and icons and large fonts.

Of course, one consequence of this GUI design strategy is that the software designer is typically forced to create a deeply branched menu structure to include all of the desired functions. The target user for most consumer-level multimedia editing programs is not accustomed to navigating through a multitude of different menu branches, wherein program features that may have taken years to make their way into the software product are crowded together with options that date back many years. The casual user needs menu structures that are intuitive and easy to access. Predictably this can cause novice users to experience frustration and discouragement with the multimedia editing process.

Additionally, some programs need to be configured to best utilize the available display. However, and once again due to the deeply branched menu structure in the TV screen user interface, a user will typically have to navigate through several sub menus to fully configure the program. For a user who expects and is accustomed to an efficiently structured menu system / GUI this is a process which is very annoying and time consuming.

On the other hand, the user who has a high resolution display device is typically presented with menus that were designed for screens of lower resolution and thus will utilize only a portion of the available screen. This imposes restraints unnecessarily on the user for whom the menu structure could likely be radically simplified.

Thus what is needed is a method that enables a user to operate a multimedia editing program on a variety of display devices but which allows the programmer to offer users on different resolution display devices a different editing experience, each such editing experience being optimized with respect to the resolution of the user's particular display device.

It should now be recognized, as was recognized by the present inventors, that there exists, and has existed for some time, a very real need for a system and method that would address and solve the above-described problems.

Before proceeding to a description of the present invention, however, it should be noted and remembered that the description of the invention which follows, together with the accompanying drawings, should not be construed as limiting the invention to the examples (or preferred embodiments) shown and described. This is so because those skilled in the art to which the invention pertains will be able to devise other forms of the invention within the ambit of the appended claims.

### SUMMARY OF THE INVENTION

There is provided herein a system and method for automatically selecting an appropriate GUI from at least two different GUIs depending on the resolution and usage scenario of an attached display. The selection of the appropriate GUI is preferably carried out after an automatic detection of the resolution of an attached display device or, in some embodiments, after manual selection by the user of resolution / device type / usage scenario from a menu provided for this purpose. The system and method taught herein is primarily intended for use in the digital multimedia editing field. In brief, the preferred embodiment of the instant invention enables the user to interact with an underlying computer program via a graphical user interface that is customized / optimized for use on the user's current display device.

As a first preferred step, a computer programmer or interface designer will begin by selecting at least two different screen resolutions that could potentially be encountered on a user's display device. Then, given these parameters, he or she will design separate GUIs that are optimised for use at each of the selected display resolutions. More particularly, the interface designer will preferably create at least two different GUIs, one of which will be suitable for use on a PC (i.e., a medium to high resolution device) and another GUI is designed for use on a TV (i.e., a relatively low resolution device). Note that the term graphical user interface or GUI should be interpreted as broadly as possible to refer to a graphical front end to a computer program that allows a user to invoke program commands by using the mouse (and/or keyboard) and a remote control.

As a next preferred step, the multiple GUIs will be written to storage along with the program that is controlled thereby. Subsequently, when the program is executed on a user's computer, it will preferably initially determine the resolution and/or the type of any attached display device(s). This step is preferably performed automatically. This determination might return a range of possible resolutions (as opposed to a single / current resolution), the refresh rate, the type of the display device, etc. Given this sort of information the instant invention will be able to determine what type of GUI would be most appropriate. Preferably, if the resolution that is returned from the query matches one of the previously selected resolutions, a GUI that was optimized for such a display will be read, written to the screen, and used subsequently for interaction with the user. If one of several possible resolutions matches one of the previously selected ones, the highest matching resolution will preferably be used. If need be, the current display device resolution may need to be modified (e.g., automatically) to match the selected GUI resolution, but this step is optional. In some preferred embodiments, rather than changing the display device resolution to the best-match resolution for the GUIs supplied with the program, instead the GUI that matches the current device resolution will be used, even if other resolutions would be a better fit. If the attached display does not have a resolution that is the same as or comparable with one of the expected user screen resolutions, the program will preferably pick the best GUI for use in those particular circumstances. For example, this might be a GUI that is appropriate for use with the next smaller sized screen resolution. Further, if there are two or more displays connected to the user's computer, the user will preferably be able to select which he or she wants to use and, according to that selection, the instant invention will initiate the display of the appropriate GUI on the selected screen.

In another preferred arrangement, two different GUIs will be prepared, one of which is designed for use on a display device that has typical PC screen resolution (e.g., SVGA or 800 by 600 resolution) and the another which is designed for use on a low resolution device such as a TV (e.g., with about 480 by 440). In this embodiment, the information that is returned from the query of the attached display devices will be used to classify - each such device as either PC- or TV-resolution and the appropriate GUI selected accordingly.

The query of the connected display device will preferably be carried out via conventional software and hardware interfaces well known to those of ordinary skill in the art. The results of this step will preferably not be displayed to the user, but instead they will be used internally to choose a GUI. Note, though, that in some instances it might be desirable to allow the user to override this automatic determination and manually select (e.g., from a menu) a different resolution.

In the preferred arrangement, each of the GUIs will have been adapted to conform to the user's most likely usage. For example, if the user is operating the program via a display that is "low" resolution (e.g., "TV" or VGA resolution), it is likely that he or she intends to view (as opposed to edit) multimedia content. In such a circumstance, the GUI will preferably contain a file selection mechanism (e.g., a button) together with VCR-like controls for options such as play, rewind, fast-forward, etc. On the other hand, if the selected display device is "high" resolution the user may be, additional to the desire to view multimedia content, intending to edit multimedia content, in which case the GUI should include - in addition to the VCR buttons - conventional multimedia editing menu items such as file save, cut, paste, reorder/rearrange clips, insert transitions, apply video / audio effects, etc.

In another preferred arrangement, the user will be given an opportunity to override the automatically determined resolution / GUI combination and choose a lower (or higher) resolution GUI. This might be desirable, for example, if the user intends to view (as opposed to edit) multimedia materials on a "high" resolution device. In such an instance, the user may only need the media control functions that would normally be provided for use with a lower resolution device. By overriding the program's initial GUI determination, the user could then reduce the interface complexity to the level actually needed. Additionally, in some embodiments the GUI choice might be configurable to be "locked" by the user. This option could be useful for a parent who was willing to allow a child to view multimedia content but did not want them to be able to edit same, even if the resolution of the monitor would permit such editing. In other instances, a user might wish to force the program to allow (say) multimedia editing on a lower resolution device. Once again, an option to override the automatically determined GUI could accommodate this possibility..

Further, it should be noted that it is possible that the lower resolution GUI could be designed to have the same functional capability as the higher resolution one, but such would likely require the lower resolution GUI to have menu items that are more deeply nested than, say, would be necessary in the higher-resolution counterpart. Preferably, and as has been discussed previously, the lower resolution GUI will have relatively large buttons and icons and utilize larger fonts. Further, a designer of a GUI for a lower resolution device will need to consider the fact that most of the users of these sorts of programs will sit at least 10 ft away from the TV screen. Therefore the selectable elements of the graphical user interface have to be easily recognizable and the user also needs to be able to initiate all functions of the software program. Additionally it is necessary for the designer of a GUI to consider that most users of such a 10ft GUI usually initiate the program functions by using a remote control, therefore the specific content of the GUI has to be designed with that specific control method in mind. On the other hand, a GUI for a high resolution device will not need a menu tree that is so deeply branching, as more options can be directly presented to the user on main screen display.

In another preferred embodiment the functionality of the GUIs provided with the program might vary depending on the resolution so that an interface that is optimised for a low resolution device screen might feature fewer functions than an interface optimised for a generic CRT or TFT display device.

In still another preferred embodiment, if two or more display devices are available to the user the instant invention will draw different GUIs simultaneously on each device according to the specifics of each display device. In the preferred arrangement, only one display device will initially be used and on that display device the selected graphical user interface will be drawn at the appropriate resolution. However, if the user wants to change for example from a TFT display screen (i.e., high resolution) to a low-resolution screen, he or she would preferably request a display device change and the instant invention would switch the current graphical user interface to the GUI optimized for the lower resolution device. The program might be notified of the user's desire to change to a different monitor by way of a menu item or, in the event that multiple displays are connected to the computer and such displays are coordinated to display a single larger / virtual display, the program could be notified by simply moving the mouse pointer onto the chosen device.

It should be clear that an approach such as the one taught herein would be a tremendous help to the average user and even more so when multiple displays are used. The user will be able to utilize the functionality of the underlying program efficiently by working with a GUI that has been optimized for the chosen display resolution. The instant invention will ensure that the program is displayed with a GUI that matches the capabilities and requirements of the connected active display device.

The approach of the instant invention makes it possible for a user to easily handle the complex setup / configuration tasks that may be required by multimedia editing software, with the bulk of the these tasks being handled by the programming of the instant invention. Further, the GUI of a program that operates according to the instant invention will be one that presents its menu selections in a clear and straightforward manner. Additionally, the fact that two different GUIs might be utilized simultaneously on two different display devices makes it possible for the user to interact with the underlying software program in the most efficient way possible given the limitations of the attached displays.

The foregoing has outlined in broad terms the more important features of the invention disclosed herein so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather the invention is capable of other embodiments and of being practiced and carried out in various other ways not specifically enumerated herein. Additionally, the disclosure that follows is intended to apply to all alternatives, modifications and equivalents as may be included within the spirit and the scope of the invention as defined by the appended claims. Further, it should be understood that the phraseology and terminology employed herein are for the purpose of description and should not be regarded as limiting, unless the specification specifically so limits the invention. Further objects, features and advantages of the present invention will be apparent upon examining the accompanying drawings and upon reading the following description of the preferred embodiments.

### BRIEF DESCRIPTION OF THE DRAWINGS

Other objects and advantages of the invention will become apparent upon reading the following detailed description and upon reference to the drawings in which:

Figure 1 illustrates a preferred environment for the instant invention.

Figure 2 illustrates a preferred graphical user interface of the instant invention as might be appropriate for use with a generic TFT/CRT display device.

Figure 3 illustrates a possible graphical user interface of the instant invention for use on a TV display.

Figure 4 contains a flowchart which describes some preferred steps of the instant invention.

Figure 5 illustrates a preferred system-level diagram that illustrates the main hardware components of the instant invention.

### DESCRIPTION OF THE PREFERRED EMBODIMENTS

Referring now to the drawings, wherein like reference numerals indicate the same parts throughout the several views, there is provided a preferred system and method for the automatic selection of an appropriate graphical user interface for a software program according to the specifications of connected display devices.

By way of general explanation and in accord with the preferred embodiment, it is to be understood that when the phrase "selection of an appropriate graphical user interface" is used herein that language will preferably be interpreted as meaning selecting one or more specifically designed user interfaces from among a plurality of available GUIs according to the resolution of an attached display device. In the preferred arrangement, resolutions that are obtained from the detection step are used to select a GUI, preferably without requiring the user to adjust any software settings. The instant invention will preferably query each attached display device to determine its resolution and afterward match the resolution(s) with GUI(s) that have been specifically developed therefore. Note that in some circumstances the chosen GUI will be automatically changed if the user manually selects a new display resolution via, for example, the Windows® "Display" control panel or utilizes a different one of multiple attached display devices.

The GUIs will preferably be stored in a database, a flat file, or in multiple individual files. In some preferred embodiments, the pre-designed GUIs will each generally feature the same basic function set, with the primary differences between them being the arrangement and size of the buttons, icons and fonts. In other preferred embodiments, each GUI will differ in functionality as is described more fully hereinafter.

GUIs for each device will preferably have been stored within a database (to include both flat, hierarchical, etc., databases) or as separate files. Thus, each GUI can be separately accessed and read as required.

The specific workflows and the additional specifications regarding the instant invention will be described in greater detail below.

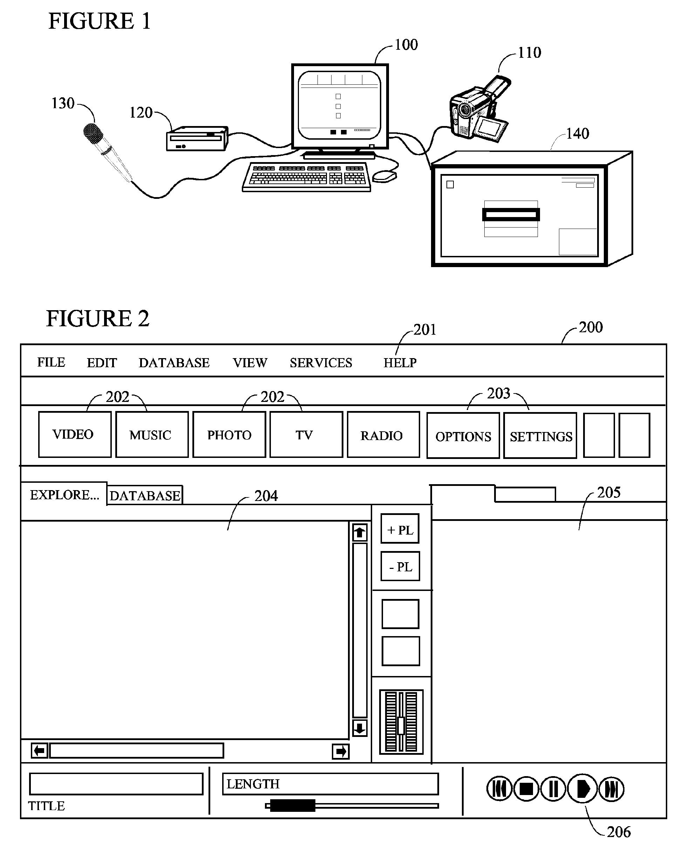

As is generally indicated in Figure 1, at least a portion of the instant invention will be implemented in form of software running on a user's computer 100 which would typically include the personal computer and an attached display device. Such a computer 100 will have some amount of program memory and hard disk storage (whether internal or accessible via a network) as is conventionally utilized by such units.

Additionally it is possible that an external camera 110 of some sort might be utilized with - and will be preferably be connectible to - the computer so that video and/or graphic information can be transferred to and from the computer (Figure 1). Preferably the camera 110 will be a digital video camera, although that is not a requirement, as it is contemplated that the user might wish to utilize still images from a digital still camera in the creation or in the viewing of his or her multimedia work. Further given the modern trend toward incorporation of cameras into other electronic components (e.g. in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing between it and the computer is utilized. Additionally a microphone 130 might be utilized so that the user can add voice-over narration to the multimedia work or the user might be able to control the functionality with speech input and a CD or DVD burner 120 might be useful for storing in-progress or completed works or stored media material available after using the software program. Additionally, given the modern trend toward incorporating advanced display controllers into computers, those of ordinary skill in the art will recognize that a display controller that has an additional TV tuner and TV output capabilities might be added to the computer, therefore enabling the computer to utilize an attached lower resolution conventional television 140.

According to Figure 2, in a preferred embodiment a user of the instant multimedia editing software will be presented with a computer screen display 200. Computer screen display 200 represents one preferred embodiment of the graphical user interface of the instant invention that would be appropriate for use on a generic CRT or TFT display device, wherein the graphical user interface contains a display of components of the sort generally indicated in this figure. For example, and as is typical for such editing programs, menu sections 201 will be provided to allow a user to interact with the underlying program and would typically include options that allow the user to activate some familiar functions of multimedia viewing / editing programs, such as identifying multimedia material for input or to activate a help screen if questions occur. Additionally the on-screen GUI will preferably offer the user additional buttons 202 that provide access to various multimedia sources. Selecting one of the buttons 202 will activate the corresponding media selection mode, wherein this mode allows the user to either edit the media material or alternatively to select the media material for display. For example, if "Video", "Music" or "Photo" is selected a user would preferably be given the option of adding additional clips / images, sorting an existing collection, and/or playing available multimedia material. Selection of the buttons for "TV" or "Radio" will preferably cause the program to activate a hardware TV or radio tuner (if such is present). In the preferred embodiment, the user will be able to record and play TV material and/or listen to radio depending on the hardware capabilities of the computer that is running the instant program. The "Options" and "Settings" buttons 203 have been provided to allow the user to modify system wide settings and configurations. The GUI 200 might also be equipped with a file selection region of the screen 204 wherein the user will be able to browse, select, and utilize previously stored multimedia material.

Additionally, on-screen transport controls 206 are preferably styled to resemble their counterparts on a conventional VCR and provide a way for the user to use a computer mouse to control the playback of the multimedia work through the use of functions such as rewind, play, stop/record, fast forward etc. Those of ordinary skill in the art will recognize that such transport controls 206 are commonplace and well known in media editing programs. It is also typical in such programs to devote some portion of the screen to a view window 205 wherein the multimedia work may be played, i.e., the currently playing video work will appear in this region 205 while it is playing. Additionally it may also be desirable in some instances to expand the view window 205 to cover the entire screen.

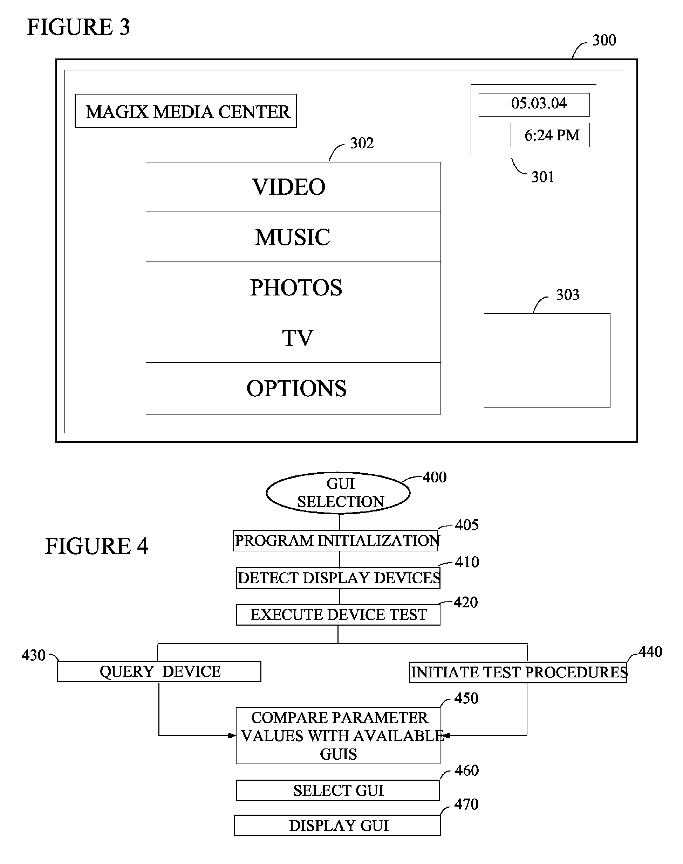

Turning next to Figure 3, this figure illustrates a preferred variation 300 of the GUI 200 that would be suitable for use on a low-resolution device such as a conventional TV screen. As can be seen in Figure 3, the selections that are available to the user via this GUI 300 are limited to only the main functions of the program (i.e., function list 302). Note that representation of the menu items 302 have been increased in size to help counteract the effect of displaying them on a lower resolution device. Further, such an increase in menu item size will make it possible for a user to sit further away from the display as, for example, when he or she is intending to passively view the content that is controlled by the GUI. Such an increase in menu item size would, of course, make these items much easier to read and activate at a distance, thereby embracing the standard distance of a user to a TV screen.

Those of ordinary skill in the art will understand that this figure potentially illustrates only the first layer of the program menu structure. In the preferred arrangement, the basic function set - of the underlying program that is operated by GUIs 200 and 300 is the same. However, the menu structure of the GUI 300 has been adapted to accommodate the graphical capabilites of a lower resolution display device, which means that the underlying menu structure has been designed to deliver the essential functions for viewing / playing multimedia to the user of the GUI, preferably without requiring the user to go deeper than three levels in the menu branches in order to access all of the program options. Additionally, note that in the preferred embodiment the date and time will be presented to the user in the top right corner of the user interface 301. Note further that the user interface contains a minimized view window 303 in which video material might be displayed as it is selected (e.g., it might act as a preview screen) or during actual playback. That being said, it is preferred that the user will be given the option of having the window 303 occupy the full screen during playback.

Figure 4 illustrates an overview of some preferred steps of the instant invention as it would operate on a user's computer. As a first preferred step 405 the program will be started and initialize various internal variables according to methods well known to those of ordinary skill in the art. Next the instant invention will preferably determine whether or not any display devices are attached to the user's computer (step 410) which will typically be the case. The identification process will preferably be performed automatically in conjunction with the start up of the program. However, in some circumstances it might be desirable to let the user manually request this step (e.g., where new hardware has been recently been added to the computer).

As a next preferred step 420 the instant invention will determine the resolution of the display device or devices identified previously. This test will preferably be performed in one of two different ways. In a first variant 430 the instant invention will initiate a query of the display devices according to methods well known to those of ordinary skill in the art. Information returned by that query will preferably include a listing of the preferred resolutions of that device. A second variant 440 will preferably implement a "brute force" testing procedure and would be appropriate, for example, where the attached display device did not have the capability to respond with a listing of its preferred resolutions. That is, in this step 440 the controlling software will attempt to manually set the resolution of the attached device to a variety of different conventional resolutions (e.g., 640 by 480, 1280 by 960, etc.). In those instances where a "success" is reported by the display device (or, equivalently, an error condition is not reported) it will be assumed that the associated resolution is possible on this device.

Given the information from steps 430 and 440, the instant invention preferably will compare the display device resolution(s) with the available GUIs and, more particularly, with the resolutions at which each has been optimized (step 450). Note that in the preferred embodiment each GUI will have one or more resolutions stored in connection with it. The stored resolutions will be those at which the associated GUI is best viewed.

For purposes of the instant invention, steps 410 through 450 will be generally referred to as an example of "determining the usage scenario" hereinafter. Additionally, this phrase should be understood to include instances where the user manually selects a display device type or overrides the automatic determination of any display-related parameters. Of course, device resolution is a preferred element of the parameters that describe the usage scenario, as is the brand/model of the display device. As another example, the user might wish to specify a contemplated usage distance, wherein the distance is measured from the user to the display device. Clearly, if the user contemplates interacting with the program from a greater operating distance (e.g., five to ten feet), the instant invention would use larger buttons, text sizes, etc. to make the menu items more amenable to manipulation by, say, a wireless keyboard or other remote control device. In other preferred embodiments, the usage scenario would include some indication by the user of how the program will be utilized (i.e., a mode of operation). That is, the user might indicate via a menu item that his or her intent was to experience (e.g., listen to and/or view) multimedia content, in which case a simplified GUI (e.g., one appropriate for use with a lower resolution device) would be presented no matter what the actual resolution of the display device is determined to be. Alternatively, if the user has indicated that he or she wishes to edit and play multimedia content, the GUI that provides the most editing options for the device resolution will preferably be utilized. Similarly, if the user wishes to manually configure the display parameters or the program itself (e.g., setup the program) a GUI appropriate for that activity will be utilized.

As a next preferred step 460, the instant invention selects the appropriate GUI from among the previously stored GUIs. In the preferred arrangement, the GUIs and associated resolutions will be stored together within a database. Note that at least two different graphical user interfaces will be accessible to the GUI section routine 400: one of which is optimized for viewing a generic TFT or CRT display device and the other of which is optimized for viewing on a TV screen or other low resolution screen.

The instant invention next preferably assigns a graphical user interface to each connected display device 460 according to the results returned by the previous test 430 / 440 and matching 450 steps.

In a preferred arrangement, the user will be able to designate which of the (potentially) multiple attached display devices will be used to control the underlying software. The assigned graphical user interfaces are then displayed to the user of the software program 470, either on the single available device, on one of the available devices (if two or more display devices are available), or on each of the available devices. Preferably each time the user opts to change the active display device, the program will automatically switch the graphical user interfaces accordingly. Preferably, switching between different screens (or different resolutions in a single-display system) will be possible at any time including, for example, during video playback, TV viewing, etc.

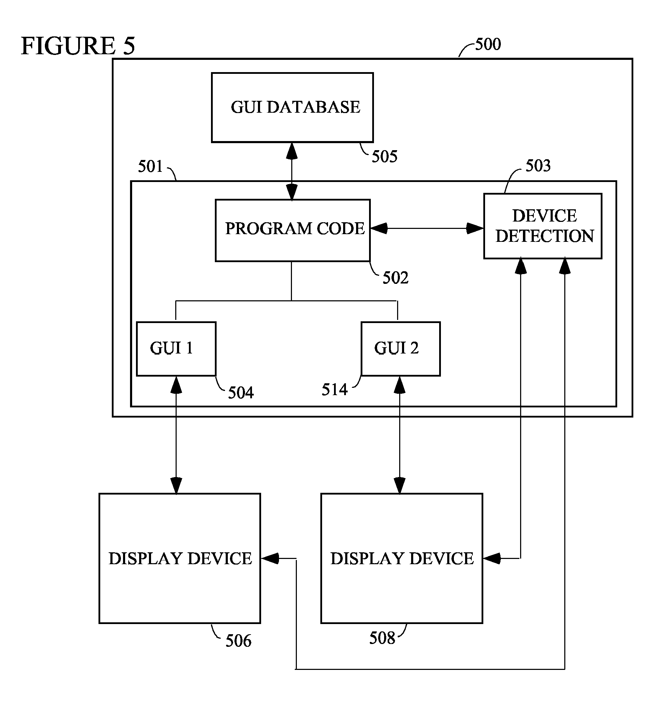

Figures 5 illustrates a preferred system-level diagram that illustrates the main hardware components of the instant invention. In more particular, within computer 500 the application 501 (which is preferably a binary executable file) and the database that contains the pre-designed graphical user interfaces 505 are together stored in non-volatile storage such as a computer hard disk. One or more display devices 506 and 508 will be connected to the computer 500 as is conventionally done. Note that, although for purposes of illustration only two connected display devices are shown in Figure 5, it is possible that more than the two display devices will be so connected.

As is indicated in this figure, the program module 503 responsible for communicating with the attached display devices 502 communicates through standard hardware interfaces well known to those of ordinary skill in the art. The communication between the module 503 and the connected display devices 506 / 508 will preferably return at least a listing of feasible resolutions for the attached devices but might also return such parameters as video refresh rate, whether or not the device is capable of displaying progressive scan video signals, etc. As has been described previously, the returned display device parameter values are then compared with those of the previously stored GUIs within the GUI database 505. Once one or more GUIs 504 / 514 have been selected, the core program code 501 will communicate with the user / display device(s) by way of those interfaces. Note that, as is generally indicated in Figure 5, in some instances multiple GUIs might be utilized and this is especially likely where two or more display devices are connected to the same PC and each such device is operating at a different video resolution. In this case, each display device will be assigned its own GUI and, depending on which display is currently active, interaction with the user will be carried out through the assigned GUI 504 / 514.

The GUI database 505 preferably takes the form indicated below. In the preferred embodiment, each GUI in the database will have been reduced to its component parts for storage therein. More particularly, in the preferred arrangement the graphical images (both ornamental and functional) that are used to create the GUI will be stored in the database, as well as its graphical background (if any), and the button set that has been optimized for use with that GUI. Additionally, it is anticipated that the technical / programming specifications for the GUI will be stored in the database along with the graphic elements. The technical specifications might include information such as the preferred colour choices and dimensions of the fonts, buttons etc. Additionally, the information that is stored with the GUI will preferably include some sort of description of the functionality that is to be associated with each button or menu item. As a specific example, a parameter field might be created that will be used to read a "rotation" parameter from a user (i.e., the "field type"), with the mechanism for obtaining this information being in the form of a "slider" (the "input mechanism") that is to be located at screen coordinates (100,200) ("field location") and that is to be scaled from 0 to 360 ("parameter range"). Those of ordinary skill in the art will recognize how a collection of parameter definitions and locations might fully specify a GUI. In this way each GUI parameter list will be used to define the interface / interaction between the underlying program features and the menu items / buttons that are presented to the user.

### Conclusions

Of course, many modifications and extensions could be made to the instant invention by those of ordinary skill in the art. For example in one preferred embodiment the instant invention will display multiple / different graphical user interfaces simultaneously on multiple display devices. Additionally, in some embodiments it might be desirable to extend the scope of the instant invention to include handheld devices wherein the graphical user interface is also specifically adapted to the specifications of the hand held device after a detection step. That is, since the instant invention is potentially able to operate with any conceivable screen resolution (provided that the designer has made accommodations for such) the instant invention could potentially be used to create cross platform applications that have would display properly whether utilizing a conventional video display device or, for example, the screen of a handheld computer.
Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made thereby those skilled in the art, without departing from the spirit of the inventive concept the scope of which is to be determined by the following claims.

## Claims

1. A method of controlling the operations of a computer program that is running on a computer with at least one display device attached thereto, comprising the steps of:
a. selecting a first usage scenario and a second usage scenario;
b. preparing a first GUI for use in operating said computer program, said first GUI being for use in connection with said first usage scenario;
c. preparing a second GUI for use in operating said computer program, said second GUI being for use in connection with said second usage scenario;
d. storing said first GUI, said second GUI and said computer program on computer readable media;
e. executing said stored computer program;
f. selecting one of said at least one attached display devices;
g. determining a current usage scenario;
h. selecting either said first GUI or said second GUI depending on said determined current usage scenario;
i. writing a representation of said selected GUI to said selected display device; and,
j. operating said program through said selected GUI.

2. A method according to Claim 1, wherein said first GUI provides a greater number of program options as compared with said second GUI.

3. A method according to Claim 1, wherein said selected display device has a brand name associated therewith, wherein said usage scenarios is described by at least one parameter, and wherein said at least one parameter is selected from a group consisting of a screen resolution of selected display device, an operating distance from said selected display device, and a mode of operation, and said brand name of said selected display device.

4. A method according to Claim 3, wherein said screen resolution of said selected display device is selected from a group consisting of SVGA resolution and TV resolution.

5. A method according to Claim 3, wherein said operating distance is between about 1 foot and about ten feet.

6. A method according to Claim 3, wherein said mode of operation is selected from a group comprising of experience multimedia content, setup said program, and edit multimedia content.

7. A method according to Claim 1, wherein said attached display devices are selected from a group consisting of a PC display device and a TV display device.

8. A method according to Claim 1, wherein there are a plurality of display devices attached to said computer, and further comprising:
(k) performing steps (f) through (j) at least twice for at least two of said plurality of display devices.

9. A method according to Claim 1, wherein step (g) comprises the step of:
(g1) obtaining a user selection of a parameter associated with said current usage scenario.

10. A method of controlling the operations of a computer program that is executed on a computer with at least one display device attached thereto, comprising the steps of:
a. selecting a plurality of different usage scenarios;
b. for each of said selected plurality of usage scenarios, preparing a corresponding GUI for use in operating said computer program, each of said GUIs being for use in connection with at least one of said usage scenarios;
c. storing said GUIs and said computer program;
d. executing said stored computer program;
e. selecting one of said at least one attached display devices;
f. determining a desired usage scenario for said selected display device;
g. selecting a GUI from among said stored GUIs depending on said desired usage scenario;
h. writing a representation of said selected GUI to said selected display device; and,
i. operating said computer program through said selected GUI.

11. A method according to Claim 10, wherein said plurality of different usage scenarios are selected from a group consisting of a play/view-only scenario, a setup-scenario, and an editing scenario.

12. A method according to Claim 11, wherein a GUI designed according to said play/view-only and said setup scenarios is designed for use on a PC display screen and wherein a GUI designed according to said play/view scenario is designed for user on a TV display screen.

13. A method according to Claim 10, wherein there are a plurality of display devices attached to said computer, and further comprising:
(k) performing steps (e) through (j) at least twice for at least two different ones of said plurality of display devices.

14. A method according to Claim 10, wherein step (g) comprises the step of:
(f1) obtaining a user selection of a desired usage scenario for said selected display device

15. A method according to Claim 11, wherein a play/view GUI associated with saidread/view scenario contains only menu options for opening and playing multimedia items.

16. A method of controlling the operations of a computer program that is being executed on a computer with at least one display device attached thereto, comprising the steps of:
a. selecting a plurality of different usage scenarios;
b. for each of said selected plurality of usage scenarios, preparing a corresponding GUI for use in operating said computer program, each of said GUIs being for use in connection with said corresponding usage scenario;
c. storing said GUIs and said computer program;
e. executing said stored computer program;
f. selecting one of said at least one attached display devices;
g. reading a value representative of a selection of a desired usage scenario from a user;
h. selecting a GUI from among said stored GUIs depending on said value representative of said desired usage scenario;
i. writing a representation of said selected GUI to said selected display device; and,
j. operating said computer program through said selected GUI.

17. A method according to Claim 16, wherein step (c) comprises the steps of:
(c1) storing said prepared GUIs in a GUI database, and,
(c2) storing said computer program therewith.

18. A method according to Claim 17, wherein each of said GUIs stored in said GUI database comprise:
(i) at least one field type,
(ii) at least one input mechanism corresponding to said at least one field type,
(iii) at least one field location, and,
(iv) at least one parameter range.

19. A method of controlling the operations of a computer program that is running on a computer with at least one display device attached thereto, comprising the steps of:
a. selecting a first resolution and a second resolution, said second resolution being lower than said first resolution;
b. preparing a first GUI for use in operating said computer program, said first GUI being for use at said first resolution;
c. preparing a second GUI for use in operating said computer program, said second GUI being for use at said second resolution;
d. storing said first GUI, said second GUI, and said computer program on computer readable media;
e. executing said stored computer program;
f. selecting one of said at least one attached display devices;
g. determining a display resolution of said selected display device;
h. selecting either said first GUI or said second GUI depending on said determined display resolution;
i. writing a representation of said selected GUI to said selected display device; and,
j. operating said program through said selected GUI.

20. A method according to Claim 19, wherein said first GUI provides a greater number of program options as compared with said second GUI.

21. A method according to Claim 19, wherein said first resolution is SVGA resolution and said second resolution is TV resolution.

22. A method according to Claim 19, wherein there are a plurality of display devices attached to said computer, and further comprising:
(k) performing steps (f) through (j) at least twice for at least two of said plurality of display devices.

23. A method according to Claim 19, wherein step (g) comprises the step of:
(g1) automatically determining a display resolution of said selected display device.
